Europäisches Patentamt

European Patent Office

Office européen des brevets

(11) Publication number: **0 304 187**
**A2**

# EUROPEAN PATENT APPLICATION

(21) Application number: 88307137.5

(22) Date of filing: 02.08.88

(51) Int. Cl.⁴: **B32B 7/10 , C08G 18/62**

(30) Priority: 20.08.87 GB 8719697

(43) Date of publication of application:
22.02.89 Bulletin 89/08

(84) Designated Contracting States:
AT BE DE FR GB IT LU NL

(71) Applicant: IMPERIAL CHEMICAL INDUSTRIES PLC
Imperial Chemical House Millbank
London SW1P 3JF(GB)

(72) Inventor: Beverly, Gordon Maxwell
38 The Coppice
Blackburn Lancashire(GB)
Inventor: Brown, David Thomas
15 Ambleside Drive
Darwen Lancashire BB3 3BG(GB)
Inventor: Espie, Alan William
197 Craig Road Heaton Mersey
Stockport Cheshire SK4 2BW(GB)

(74) Representative: Downer, John Michael et al
Imperial Chemical Industries PLC Legal
Department: Patents PO Box 6 Bessemer
Road
Welwyn Garden City Herts, AL7 1HD(GB)

(54) Laminates reinforced with polyurethane compositions.

(57) The inclusion of nucleophilic groups containing active hydrogen at the surface of thermoplastics materials provides improved adhesion to polyurethane or polyisocyanurate compositions. Laminates of the modified thermoplastics material and the polyurethane or polyisocyanate composition are particularly useful for sanitary-ware fabrication and can permit satisfactory adhesion to be obtained without the use of expensive closed moulds. The nucleophilic groups containing active hydrogen can be included in the thermoplastic material by using suitable copolymerisable additives or alternatively non-copolymerisable additives can be dispersed in the thermoplastic material using the polymerisation procedure.

EP 0 304 187 A2

EP 0 304 187 A2

## LAMINATES REINFORCED WITH POLYURETHANE COMPOSITIONS

This invention relates to laminates of a layer of a thermoplastics material reinforced on one surface with a polyurethane composition.

United Kingdom Patent Application No. 2 148 786 describes laminated articles, such as baths or shower trays, comprising a preformed thermoplastics shell with a reinforcing backing layer of a rigid polyurethane foam using a closed-tool process in which reactant streams are brought together under pressure to form polymer directly in a mould on the underside of the preformed thermoplastics shell. The invention is exemplified with reference to a polyol reactant, an isocyanate reactant and a halocarbon blowing agent.

European Patent Publication 211 495 describes a polyurethane/thermoplastic sheet laminate of improved performance to hot/cold water cycling in which the halocarbon blowing agent is essentially absent from the curing system.

The invention provides a laminate which can be produced having good properties, such as good hot/cold water cycling resistance and good adhesion between the polyurethane composition and the thermoplastics material without the need to employ the expensive tooling of a closed-tool process to conduct the reaction under pressure in a closed mould. Such a closed-tool process can be used if desired. The polyurethane compositions used in the present invention include polyisocyanurates when used in conjunction with appropriate blowing agents.

According to the invention there is provided a laminate comprising a thermoplastics material layer and a reinforcing polyurethane or polyisocyanurate composition layer wherein the surface of the thermoplastics material layer is provided with nucleophilic groups containing active hydrogen radicals which groups have been reacted with the isocyanate used to form the reinforcing composition.

In its simplest form the invention consists of a laminate of a polyurethane composition and a thermoplastics polymer layer which is a copolymer containing a relatively low concentration of comonomer units which provide the nucleophilic groups containing active hydrogen radicals. Reaction of polyurethane forming constituents at the surface of the polymer layer result in a chemical bond at the interface.

The nucleophilic group containing active hydrogen in the thermoplastics material need not necessarily be present throughout the thermoplastics polymer layer. For example, the thermoplastics layer may itself consist of a laminate comprising a layer of thermoplastics material which is to provide the working surface or show surface of the laminate, which is not contacted by the polyurethane, and an intermediate thermoplastics layer containing the necessary nucleophilic groups with active hydrogen radicals for coupling with the polyurethane composition. The intermediate layer may be applied to the layer providing the show surface as a thin film by known techniques for applying thin films.

Alternatively, the thermoplastics material may comprise a thermoplastics polymer and an intimately dispersed material, of molecular weight at least 500 and preferably a polymeric material, which intimately dispersed material is provided with the nucleophilic groups containing active hydrogen. Such intimately dispersed material may fulfil other functions in the laminate such as acting as a dispersing agent for other materials, particularly finely divided particulate materials, or such as rubber toughening additives providing improved toughness.

Suitable nucleophilic groups containing active hydrogen are most conveniently introduced into the polymer of the thermoplastics layer, the intermediate layer or the intimately dispersed material in the thermoplastics layer by polymerisation of a monomer capable of providing the nucleophilic group with active hydrogen. Suitable ethylenically unsaturated monomeric materials include hydroxy and epoxy substituted aliphatic or alicyclic esters of $\alpha$, $\beta$ unsaturated acid having from 3 to 6 carbon atoms, the hydroxy or epoxy substituted aliphatic or cycloaliphatic radical in said ester containing at least 2 carbon atoms. The radical may be a long chain radical such as an ethoxylated or propoxylated hydroxy radical of molecular weight up to 500 or more. Examples of this class include 2-hydroxyethyl acrylate and methacrylate, 2-hydroxy propyl acrylate and methacrylate, 3,4 dihydroxy butyl acrylate and methacrylate and polyethylene glycol (PEG400) mono methacrylate.

Also suitable are ethylenically unsaturated monomers containing primary or secondary amino groups such as acrylamide and methacrylamide, together with mono-N-substituted amides, such as N-methyl acrylamide and N-methyl methacrylamide, Mono-N-methylol amides such as mono-N-methyl methacrylamide are also suitable.

Ethylenically unsaturated monomers containing functional carboxylic groups may also provide effective coupling but the presence of carboxylic groups may introduce adverse effects such as water sensitivity.

The epoxy substituted monomers are generally less preferred because they are less reactive towards isocyanate group but are effective if suitably catalysed.

2

The adhesion is improved by forming the thermoplastics layer contacting the polyurethane by the inclusion of at least 0.2% by weight of the layer of at least one polymerisable monomer as specified above containing a nucleophilic group providing an active hydrogen radical. The upper limit of concentration of polymerisable monomer will depend on the degree to which higher concentrations adversely affect properties other than adhesion. In general it will not be necessary to use more than 10% by weight of a polymerisable monomer and lower concentrations are preferred. When non-polymerisable additives containing reactive nucleophilic groups are used the concentration required will depend on the concentration of reactive groups in the additive. The maximum concentration of such additives may need to be more than 10% by weight of the final composition to provide adequate adhesion.

The thermoplastics material layer may be based on any thermoplastics polymer which provides the necessary surface properties for the application in which the laminate is to be used. Of particular interest are laminates based on polymers of methyl methacrylate because these provide relatively hard surfaces which can be coloured with pigments systems and dyes to provide extremely aesthetically attractive surfaces, which have found wide application in articles of sanitaryware such as baths and shower trays.

Laminates of two types of thermoplastics, in which at least an outer layer of the laminate can provide a durable show surface may be employed. For example, laminates of an acrylic polymer with the acrylonitrile/butadiene/styrene copolymer known as ABS may be employed. The thermoplastics material forming the show surface can contain any of the auxiliary additives conventionally present in such sheet, particularly the colourants which give acrylic sheet its attractive appearance. The nucleophilic groups containing active hydrogen groups must be present at the surface of the layer of thermoplastics material which is to be bonded to the polyurethane composition.

The thermoplastics material layer may contain a variety of additives conventionally used in such materials, such as pigments, fillers, uv stabilisers, heat stabilisers, release agents and cross-linking agents. Thermoplastics materials containing very high concentrations of finely divided fillers, such as described in British Patent No. 1 493 393 may be used in the present invention.

The polyurethane and polyisocyanurate compositions used in the invention are those known in the art. Thus the organic di- or polyisocyanate component of the composition may be any of the isocyanates known to be useful for the formation of polyurethanes and polyisocyanurates. Of particular interest are aromatic di- or polyisocyanates, for example tolylene diisocyanate and especially diphenylmethane diisocyanate (MDI) which are commercially available in a variety of forms. Suitable diphenylmethane di-isocyanates include:

(a) diphenylmethane - 4,4' - diisocyanate and mixtures thereof with other isomers of diphenylmethane diisocyanate;

(b) methylene bridged polyphenylpolyisocyanates prepared by phosgenation of mixtures of appropriate polyamines obtained by the condensation of aniline and formaldehyde and known as "polymeric" MDI, the composition of which may subsequently be varied by distillation, crystallisation or other separation techniques to give products with a weight average functionality in the range 2 to at least 3.3;

(c) polymers and oligomers obtained by reacting diphenylmethane diisocyanates or "polymeric MDI" with a monomeric glycol or polyhydric alcohol (or mixtures thereof) or with a hydroxyl-ended polyester or polyether and known as "MDI prepolymers"; and

(d) modified diphenylmethane diisocyanates or "polymeric MDI" in which a proportion of the isocyanate groups are converted into other groups such as carbodiimide, uretonimine, biuret or allophanate groups, or in which a proportion of the isocyanate groups are reacted with an isocyanate-reactive compound.

The polyol component is a polyether or polyester polyol suitable for the preparation of polyurethanes. Typical polyols include propylene oxide adducts of polyfunctional hydroxy compounds (pentaerythritol, sorbitol, -methylglucoside, sucrose, phenol-formaldehyde resins, and others) and propoxylated polyfunctional amino alcohols and diamines.

The polyurethane or polyisocyanurate composition used for reinforcement may be foamed or unfoamed, that is having a density as low as 30 kg/m³ by virtue of being highly foamed, or may have a density as high as 1000 to 1200 kg/cm³ if essential void free.

For applications where the reinforcement is provided on a convex surface, for example the underside of an article of sanitaryware it is preferred to use a foamed composition wherein the density of the foam should preferably be within the range 200 to 800 kg/m³ and more desirably 300 - 600 kg/m³. For applications where a hollow profile is filled the density may be lower than this range.

Suitable foams can be produced using low concentrations of water, with the preferred concentration being in the range 0.1% to 1% by weight the polyol. The concentration should be chosen to give a required density.

The composition of the invention can be applied to the underside of the thermoplastics sheet in a

3

closed mould with the thermoplastics sheet being in the form of a shell which conforms closely to the shape of the male mould half of a pair of matching mould halves and the composition being injected into a space left between the female mould half and the underside of the sheet. However, the compositions of the invention provide such good adhesion between the polyurethane or polyisocyanurate composition and the modified thermoplastic material that it is not necessary to cure the polyurethane under pressure in a closed mould. The ability to dispense with a mould avoids the problem of ensuring that the shape of the shell conforms closely to the shape of the mould. In the closed mould situation distortion of the shell can occur due to the high temperatures and pressures involved in curing the polyurethane.

When a mould is not employed the reactant constituents for the polyurethane are mixed, together in a metering unit prior to hand spraying the mixture or using an automatic spraying system to apply the mixture to the underside of the shell of thermoplastics material.

The polyurethane may constitute the sole reinforcement in the backing layer or alternatively other aids to reinforcement may be included. Thus the foamable composition may contain a proportion of inorganic fillers such as short glass fibres intimately dispersed in the composition. Yet again, a glass fibre mat of long fibres may be included in the lay-up in the mould so that the composition penetrates between the fibres of the mat during injection.

The invention is further illustrated by reference to the following examples.

## EXAMPLE 1

A syrup of poly(methyl methacrylate) was prepared by heating methyl methacrylate monomer with 0.002% of azodiisobutyronitrile at 80°C until the polymer content reached about 8% by weight. To 100 parts by weight of the syrup were added 0.02 parts by weight of glycol dimethacrylate, 2.0 parts by weight of 2-hydroxyethyl methacrylate (HEMA) and a further 0.01 parts of azodiiosbutyronitrile. The mixture was poured between glass plates and polymerised by heating at 80°C for 1 hour followed by 30 minutes at 118°C. The glass plates were set up so that the fully polymerised sheets had a thickness of 3 mm.

A control sheet was prepared under the same conditions except in that the HEMA was omitted from the recipe.

The adhesion between a polyurethane composition and the sheet was examined by spraying polyurethane forming reactants on to pieces cut from the sheet and assessing the ease with which the polyurethane layer could be prised away from the modified poly(methyl methacrylate) sheet according to the following procedure.

Pieces of the sheet 150 mm wide and 150 mm in length were wiped with 'Genklene' solvent. A mixture of the polyol blend 'PBA 6199' containing 0.13% by weight of water and the isocyanate 'Suprasec' 5005 in the weight ratio 1:1 were sprayed on to the pieces of sheet to give a foam thickness of 6 to 8 mm which was allowed to cure at ambient temperature using the heat of reaction to effect the cure. The foam had a density of between 500 and 600 kg/m$^3$. ('Suprasec' is a Registered Trade Mark of Imperial Chemical Industries PLC; the blend PBA6199 is also available from Imperial Chemical Industries PLC). Samples, 3 mm wide and 50 mm long, were cut from the foam backed laminates.

Each of five samples of laminate were prised apart at the polyurethane/PMMA interface using a knife blade. The adhesion was good with fracture tending to occur within the polyurethane rather than along the interface. In five control samples in which the same polyurethane composition was applied to PMMA homopolymer sheet the adhesion was significantly inferior with fracture tending to occur cleanly along the interface.

The resistance of the laminate of the invention to hot/cold water cycling was determined on a reinforced bath blank formed from a sheet prepared as described above containing HEMA. The bath blank was sprayed with the polyurethane composition described above to provide a coating about 5 mm thick over the underside of the bath blank. The bath was subjected to the hot/cold water cycling test required in the proposed Final Draft of the CEN Standard No. pr EN 198-1 entitled Baths for Domestic Purposes made from Acrylic Materials : Part 1: Specification for Finished Baths. The reinforced bath passed the test defined therein.

EXAMPLE 2

The polymerisation procedure of Example 1 was repeated to evaluate a number of other monomers containing nucleophilic groups containing active hydrogen. The comonomers were present at 2 parts by weight per 100 parts by weight of syrup. Polymerised sheets of suchmaterials were sprayed in the same way as described in Example 1. The degree of lamination was assessed using a knife blade to prise the sheet from the foamed coating. The performance of each sheet was assessed on a scale of 0 to 3, taking 0 as the degree of adhesion of the control homopolymer sheet and 3 as the level obtained for the product of Example 1. The results obtained are shown in Table 1.

Table 1

| Monomer | Adhesion Rating |
|---|---|
| 2-hydroxypropyl methacrylate | 3 |
| Propylene glycol monomethacrylate | 3 |
| Methacrylamide | 1 |
| N-methyl methacrylamide | 1 |
| Methacrylic Acid | 1 |
| Glycidyl methacrylate | 3 |

EXAMPLE 3

The polymerisation procedure of Example 1 was followed using 2 parts by weight of long chain materials of molecular weight at least 500 containing reactive nucleophilic groups but not containing unsaturated polymerisable groups. The test procedure of Example 2 gave the following ratings.

| Additive | Adhesion Rating |
|---|---|
| Daltocel F2805 (a polyol of molecular weight 6000 containing 3 hydroxyl groups per molecule) | 1 |
| Jeffamine T5000 (a polyetheramine of molecular weight 5000 containing 3 primary amine groups per molecule) | 2 |
| Methyl methacrylate : 2 hydroxy ethyl methacrylate copolymer in weight ratio 75:25* | 2 |

* Added at a concentration to give 1.5% by weight of HEMA content based on total polymer content.

Claims

1. A laminate comprising a thermoplastic material layer and a reinforcing polyurethane or polyisocyanurate composition layer wherein the surface of the thermoplastics material layer is provided with nucleophilic groups containing active hydrogen radicals which groups have been reacted with the isocyanate used to form the reinforcing composition.

2. A laminate according to claim 1 wherein the nucleophilic groups containing active hydrogen are provided in an intermediate layer in the laminate to which the polyurethane or polyisocyanurate composition is bonded.

3. A laminate according to claim 2 in which the laminate contains a surface layer adhered to the intermediate layer and not contacted by the polyurethane or polyisocyanurate composition and which is essentially free of nucleophilic groups containing active hydrogen.

4. A laminate according to any one of claims 1 to 3 in which the nucleophilic groups containing active hydrogen available for reaction with the reinforcing composition are provided by the intimate dispersion of a preformed high molecular weight material within the thermoplastics material layer.

5. A laminate according to any one of claims 1 to 4 in which the nucleophilic groups reactive with the polyurethane or polyisocyanurate composition are provided by copolymerisation in the thermoplastics material of a hydroxy or epoxy substituted aliphatic or alicyclic ester of an $\alpha$, $\beta$ unsaturated acid having from 3 to 6 carbon atoms, the hydroxy or epoxy substituted aliphatic or cycloaliphatic radical having at least 2 carbon atoms.

6. A laminate according to any one of claims 1 to 4 in which the reactive nucleophilic groups are provided by copolymerisation in the thermoplastics material of a copolymerisable ethylenically unsaturated monomer containing primary or secondary amino groups.

7. A laminate according to any one of claims 1 to 4 in which the reactive nucleophilic groups are provided by a copolymerisable ethylenically unsaturated monomer containing functional carboxylic groups.

8. A laminate according to any one of claims 5 to 7 containing at least 0.2% by weight of the functional comonomer in the thermoplastics material.

9. A laminate according to any one of claims 1 to 8 in which the polyurethane or polyisocyanurate has a density between 30 and 1200 kg/m$^3$.

10. A laminate according to claim 9 in which the polyurethane or polyisocyanurate has a density between 300 and 600 kg/m$^3$.

11. An article of sanitaryware comprising a laminate according to any one of claims 1 to 10.